(19) Europäisches Patentamt
European Patent Office
Office européen des brevets

(11) **EP 2 365 411 A1**

(12) **EUROPEAN PATENT APPLICATION**

(43) Date of publication:
**14.09.2011 Bulletin 2011/37**

(51) Int Cl.:
*G05D 7/06* (2006.01)    *B01L 3/00* (2006.01)

(21) Application number: **10002499.1**

(22) Date of filing: **10.03.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA ME RS**

(71) Applicant: **Sensirion AG**
**8712 Stäfa (CH)**

(72) Inventors:
• **Bürgi, Lukas**
**8049 Zürich (CH)**

• **Huber, Dieter**
**8708 Männedorf (CH)**
• **Marty, Diego**
**8526 Gossau (CH)**
• **Mayer, Felix**
**8712 Stäfa (CH)**

(74) Representative: **Sutter, Kurt et al**
**E. Blum & CO. AG**
**Vorderberg 11**
**8044 Zürich (CH)**

(54) **Flow control arrangement**

(57)    It is referred to a flow control arrangement and a method for controlling the flow of a fluid. Given that the sensor device supports measurements for determining an average flow of a fluid, a sensor signal (T(t)) of a flow sensor (2) of the sensor device is first linearized and subsequently processed, and supplied as actual flow to a controller (14) for controlling an ON/OFF valve (16). The linearized signal values are provided at a rate not less than a maximum switching frequency of the ON/OFF valve. This allows for detecting oscillations resulting from a high frequent switching of the valve (16).

FIG. 5

**Description**

Technical Field

The present invention relates to a flow control arrangement, its use, and a method for controlling a flow of a fluid.

Background Art

Flow sensors may be used for measuring flows of any fluid such as liquids or gases. Such sensors typically transform the flow such as a mass flow or a volume flow into an electrical output such as a voltage. However, the characteristic of many of these sensors is non-linear meaning that the relationship between the measure and the electrical output is non-linear. For subsequent processing non-linear characteristics are not preferred in terms of complexity. This is true also for a flow control arrangement in which the flow of a fluid, such as a gas or a fluid is controlled by means of an ON/OFF valve.

Summary of the Invention

The problem to be solved by the present invention is therefore to provide a flow control arrangement along with a method for controlling a flow of a fluid which account for a non-linear characteristic of the subject sensor.

This problem is solved by a flow control arrangement according to the features of independent claim 1, and by a method for controlling a flow of a fluid according to the features of independent claim 15.

Accordingly, in a first aspect of the present invention there is provided a flow control arrangement for controlling a flow of a fluid in a channel by means of an ON/OFF valve. The arrangement comprises a flow sensor for providing a sensor signal representing the flow of the fluid and a linearizer for converting the sensor signal into a linearized signal. The linearizer is designed for providing linearized signal values at a rate not less than a maximum switching frequency of the ON/OFF valve. By means of a controller the ON/OFF valve is controlled subject to a difference between an actual flow derived from the linearized signal and a reference flow.

The flow sensor measures a flow of a fluid and typically follows a non-linear sensor characteristic. Such characteristic most often is owed to the physics of the flow sensor. While the flow sensor provides a non-linear sensor signal subject to the current flow, such sensor signal is input to the linearizer. The output of the linearizer provides a linearized signal based on the sensor signal which linearized signal is used for further processing. An actual flow being the result of such further processing is input to the controller and compared to a reference flow also input to the controller. A control signal provided by the controller to the ON/OFF valve is dependent on the difference between the actual and the reference flow and controls the ON/OFF valve accordingly.

ON/OFF valves typically have a maximum switching frequency limited by the mechanics involved. According to the present aspect of the invention, such maximum switching frequency exhibits the lower limit for the frequency at which linearized signal values are provided by the linearizer for further processing. It is beneficial to provide linearized signal values at least at such frequency for the reason that the switching capabilities of the valve determine the rate of changes in flow directions and/or the rate of significant changes in the flow throughput. In order to capture such changes in direction or throughput of flow, the rate of providing linearized signal values fulfils the above condition.

It is beneficial to implement the linearization prior to any further processing for the reason that such order allows for a correct output signal.

In a preferred embodiment, the average flow in the channel shall follow a given reference flow such that there is a need for determining an average flow of the fluid. In such embodiment, the sensor signal of the flow sensor is first linearized and subsequently averaged.

According to a second aspect of the present invention there is provided a method for controlling a flow of a fluid in a channel by means of an ON/OFF valve. A sensor signal is received from a flow sensor representative of the flow of the fluid in the channel. The sensor signal is converted into a linearized signal. The ON/OFF valve is controlled subject to a difference between an actual flow derived from the linearized signal and a reference flow. Again, the linearized signal values are provided at a rate not less than a maximum switching frequency of the ON/OFF valve.

First linearizing the sensor signal and subsequently taking other processing steps if any such as averaging or integrating is beneficial in terms of further processing and in terms of correct reproduction of the flow. And it is beneficial to provide linearized signal values at a rate sufficient for monitoring any changes in the flow not only induced by a source of the flow, but also by the valve.

For other advantageous embodiments it is referred to the dependent claims. It is noted that embodiments referred to or claimed only in connection with the arrangement shall be disclosed in connection with the method, too, and vice versa.

Brief Description of the Drawings

A number of embodiments of the present invention will now be described by way of example only and with reference to the accompanying drawings, in which the figures show:

Fig. 1 a characteristic of a flow sensor,
Fig. 2 a characteristic of a linearizer,
Fig. 3 a block diagram of components of a flow control arrangement according to an embodiment of the present invention,
Fig. 4 a portion of a look-up table according to an embodiment of the present invention,
Fig. 5 a block diagram of a flow control arrangement according to an embodiment of the present invention
Fig. 6 and Fig. 7 diagrams illustrating linearizing and averaging steps,
Fig. 8 a top view of components of a flow control arrangement according to an embodiment of the present invention, and
Fig. 9 a cross-sectional view of the components according to Figure 8 along the lines II-II.

Detailed Description of the Invention

In the figures, like or similar elements are referred to by the same reference numerals across all figures.

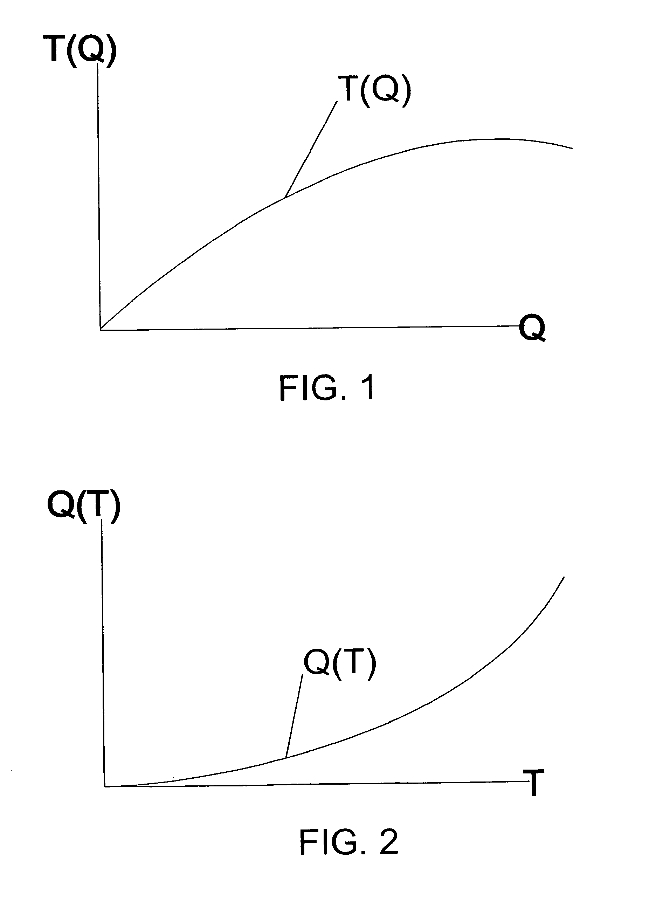

The diagram in Figure 1 illustrates a sample sensor characteristic T(Q) of a sensor. Preferably, the sensor is a flow sensor, Q denotes the flow in the channel, and T(Q) denotes corresponding values at the sensor output. The sensor characteristic T(Q) is of non-linear nature. Ideally, the characteristic T(Q) does not show any offset at Q = 0, such that whenever there is no flow in the channel the sensor does provide a sensor signal T=0.

The flow sensor outputs a sensor signal T(t) over time t with sensor values T. In order to allow for a more easy subsequent processing the sensor signal T(t) as provided by the flow sensor is linearized.

Linearization in the present context is understood as a way of replacing the non-linear characteristic of the sensor by a linear characteristic of a system including the sensor and a linearizer arranged in series. For this reason, the sensor output is connected to an input of the linearizer. A sample characteristic Q(T) of the linearizer is illustrated in Figure 2. In this embodiment, the non-linear characteristic Q(T) of the linearizer is the inverse of the characteristic of the sensor, i.e. $Q(T) - T^{-1}(Q)$ .

As a result, a total characteristic of a system comprising the sensor and the linearizer is linear in a sense that signal values T' at the output of the linearizer correspond in a linear fashion to flow values Q, for example according to T'= b * Q with slope b being a constant. As long as the sensor characteristic provides a signal T=0 for flow Q=0, the total characteristic does so, too. The output signal of the linearizer over time may be denoted as Q(t), or T'(t) respectively.

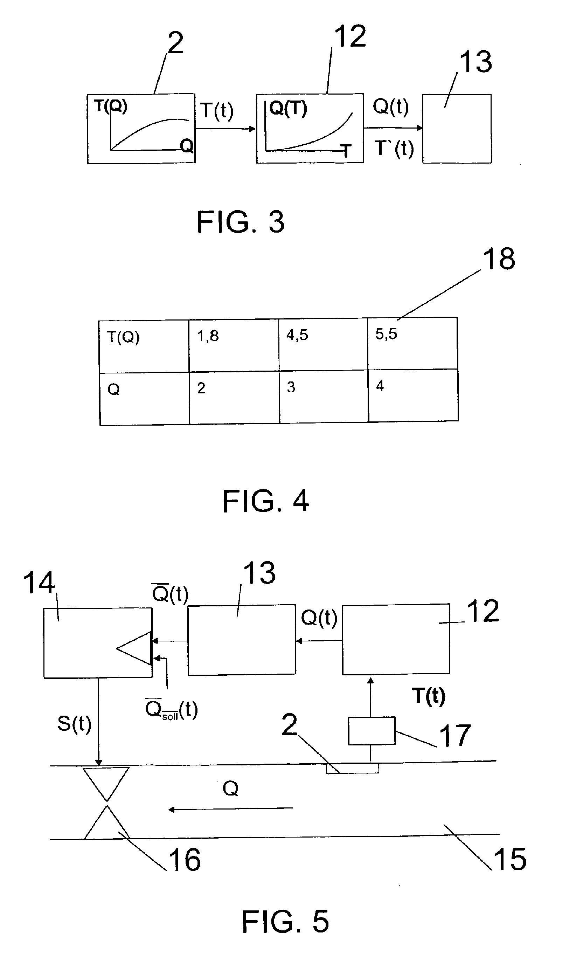

Figur 3 illustrates in a block diagram components flow sensor 2, linearizer 12 and averager 13 of a flow control arrangement according to an embodiment of the present invention. Corresponding characteristics and output signals are shown in the respective blocks.

The sensor signal T(t) may be supplied by the sensor 2 in form of an analog signal. A linearizer 12 for an anlog signal may be a non-linear operational amplifier, for example. The sensor signal T(t) may alternatively be supplied by the sensor 2 as a digital signal, or be converted into a digital signal prior to being supplied to the linearizer 12. For facilitating illustration, there is no different notation used in the present application for signals in the analog domain and in the digital domain. In particular, when the sensor signal T(t) is supplied to the linearizer in digital form, a look-up table may be comprised in the linearizer. Figure 4 illustrates a portion of such a look-up table 18.

In case of an analog-digital conversion of the sensor signal T(t) prior to linearization, sensor output values T are advantageously provided to the linearizer 12 at a rate of a sampling frequency of the analog/digital converter. In the linearizer 12, there is provided the look-up table 18 for assigning flow values Q to sensor output values T(Q) as indicated. Advantageously, to each digital sensor signal value there is assigned a linearized signal value. By translating the sensor output values T into flow values Q a flow signal Q(t), may be formed in digital form. This flow signal Q(t) represents a linearized signal based on the sensor signal T(t). Consequently, the linearizer 12 in form of a look-up table 18 transforms the sensor signal T(t) into a linearized flow signal Q(t) over time t of linear property with respect to flow Q.

In some applications an average flow may be of interest for the reason that by averaging high frequency alterations in the flow as well as induced high frequency noise will be low-pass filtered by the averaging process. According to an embodiment of the present invention, the linearized sensor signal T'(t), Q(t) will be averaged. A time interval At = $t_2$ - $t_1$ is determined which time interval $\Delta t$ indicates the time period for which an average value shall be determined. All values of the linearized sensor signal T'(t), Q(t) within such time interval $\Delta t$ are accumulated or integrated and the sum is divided by the time interval $\Delta t$. This operation results in an averaged linearized sensor signal for the specific time interval $\Delta t$ according to:

$$\overline{T'}(\Delta t) \;=\; \int_{t_1}^{t_2} T'(t)dt \qquad\qquad (1)$$

Alternatively, a weighted average may be used, for example, as it is provided by a low-pass filter with an exponentially decaying pulse response.

By determining the averaged linearized sensor signal $\overline{T}(\Delta t)$ for multiple times t a moving averaged linearized sensor signal $\overline{T}(t)$ will be achieved according to the following equation:

$$\overline{T'}(t) \;=\; \int T'(t)dt \qquad\qquad\qquad (2)$$

In terms of notation, the averaged linearized signal may also be denoted as $\overline{Q(t)} = \overline{T^{-1}(t)}$.

Generalizing the aforesaid, the linearized signal is further processed, for example, by averaging means, or by integrating means or summation or any other means. The result of such processing shall be denoted as actual flow which is supplied to a controller 14 as illustrated with respect to Figure 5. In these embodiments, linearization is accomplished prior to further processing such as averaging or integrating. This order of processing is beneficial in view of providing the correct averaged flow.

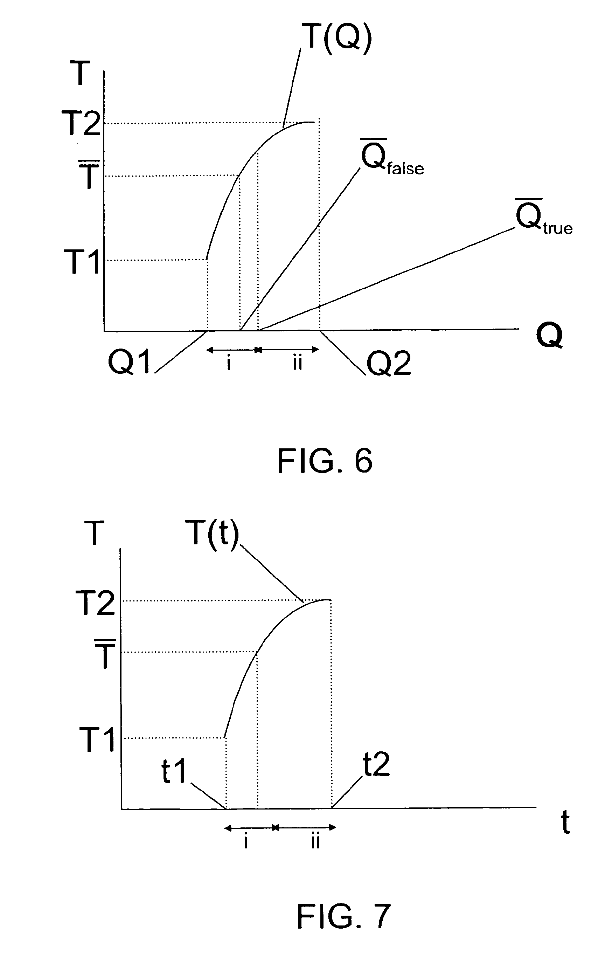

Figures 6 and 7 help in understanding the effect of linearizing and averaging subject to the order these steps are executed in: In Figure 6, a non-linear section of a sensor characteristic T(Q) is shown. For illustration purposes, the section is divided into two subsections i and ii of equal width in Q. While the sensor characteristic T(Q) in the first section i shows a steep slope from a very low sensor output T1 towards high sensor output values, the sensor output T(Q) in the second subsection ii shows a moderate slope on a high level of sensor output values T(Q) and ends in a sensor output value T2.

Now, it is assumed that a constantly rising flow Q is measured by a flow sensor with a characteristic according to Figure 6. The corresponding sensor output T(t) over time is illustrated in Figure 7. A time average of the sensor output T(t) over time intervals i and ii of equal width will result in an average sensor value $\overline{T}$ somewhere in the first subsection i for the reason that significantly lower sensor output values T(t) in subsection i will more than balance the high sensor output values T(t) of subsection ii. Switching back to Figure 6, an average flow value $Q_{false}$ corresponds to the averaged sensor output $\overline{T}$.

However, the real flow Q in the channel is - as required - constantly rising over intervals i and ii, from initial flow value Q1 and to final flow value Q2. This results in a true average flow $\overline{Q}_{true}$ of $Q_{true}$ =Q1 + ((Q2-Q1)/2) which is different to the average flow $\overline{Q}_{false}$ resulting from first averaging the sensor signal. This shows that the sensor signal T(t) preferably first is linearized and then averaged rather than the other way round.

Figure 5 refers to a flow control arrangement according to an embodiment of the present invention presented as a block diagram. The flow of a fluid in a channel 15 is measured by a flow sensor 2, a sensor signal T(t) of which is converted into the digital domain by an analog/digital converter 17. A linearizer 12 linearizes the digital sensor signal T(t) and provides a flow signal Q(t) as linearized signal to an averager 13. The averager 13 provides at its output a moving averaged flow signal $\overline{Q}(t)$ over time as actual flow.

In the subject application, the average flow signal $\overline{Q}$(t) shall follow a reference flow $\overline{Q_{soll}}$(t) given as a constant or following any other function over time t. For this reason, the actual flow $\overline{Q}(t)$ is supplied to a PID controller 14 as is the reference flow $\overline{Q_{soll}}$(t). The PID controller 14 generates a control signal S(t) for controlling the opening and closing of the valve 16 subject to the difference between the reference flow $\overline{Q_{soll}}$(t) and the averaged flow $\overline{Q}$(t). Overall, the arrangement according to Figure 5 provides for a closed-control loop for having an averaged linearized sensor signal follow a reference signal.

A closing of valve 16 may at least for a very short period in time evoke flows in the channel in a direction opposite to the usual flow direction which usual flow direction is depicted by an arrow in Figure 5. For this reason, it is advantageous to provide linearization means also for flows of a negative sign and not to cut the linearization at flow zero.

An ON/OFF valve in general may denote a valve which exhibits two states, i.e. ON and OFF, or, in other words, allowing for a maximum flow, or, alternatively, zero flow. Such valves typically do not provide for semi open states allowing only for a portion of fluid to flow through. These valves on the other hand provide for a rather simple set-up and very fast response times. Despite of its limitations to an ON and an OFF state, an ON/OFF valve may be used for controlling a flow rate to any reference flow. This may be achieved by switching the valve ON and OFF at a frequency determined for allowing for such average flow rate to pass. Generally, ON/OFF valves exhibit a switching frequency at which they can operate at maximum. Such maximum switching frequency may depend on the mechanics of the valve or other parameters. Any operation above this maximum frequency may not effect an opening or a closing of the valve for the reason that the valve cannot react swiftly enough to such triggering.

The control signal S(t) for an ON/OFF valve may take the form of a pulsed signal. Given that ON/OFF valves may be operated at a certain maximum switching frequency, a pulse frequency in the control signal advantageously does not exceed such maximum switching frequency.

When operating the valve at the maximum switching frequency it still might be of interest to capture all flow information in the channel, including oscillating flow information. For this reason, it is preferred that the sampling rate of an analog/digital converter in the closed loop control at least is not less than the maximum switching frequency of the valve. Advantageously, it is at least twice the maximum switching frequency. Preferably, the sampling rate is at least five times the maximum switching frequency, and advantageously between five and ten times the maximum switching frequency of the valve. In other words, it is preferred that the sampling interval of the analog/digital converter 17 is not more than a minimum switching cycle of the valve, preferably, at maximum half of the minimum switching cycle allowed for the valve. For example, the valve 16 may be embodied as ON/OFF valve with a fastest switching cycle in the order of 1 ms. Then, the sensor signal T(t) may be sampled in the A/D converter 17 at least according to the fastest switching cycle times of the valve 16. Hence, in the present embodiment, the sampling interval advantageously is not more than 1 ms. As a consequence, the flow Q in the channel 15 can be mapped into the digital domain with sufficient precision for detecting oscillations before it will be linearized and averaged.

The linearizer provides linearized signal values at a frequency not less than the maximum switching frequency of the valve. Advantageously, the linearizer provides values at least twice the maximum switching frequency, or, in another embodiment not less than five times the maximum switching frequency, or between five and ten times the maximum switching frequency of the valve. The analog/digital converter 17 may be in a position to provide sample values at a even higher rates than the linearizer may be able to provide linearized signal values, but not necessarily has to

For example, the valve 16 may be embodied as ON/OFF valve with a fastest switching cycle in the order of 1 ms. Then, the linearizer may at least provide linearized values according to the fastest switching cycle times of the valve 16, i.e. at least not more than every 1 ms. As a consequence, the flow Q in the channel 15 can be mapped into the digital domain with sufficient precision for detecting oscillations. In another embodiment, a rate of providing linearized signal values is not less than 100 Hz.

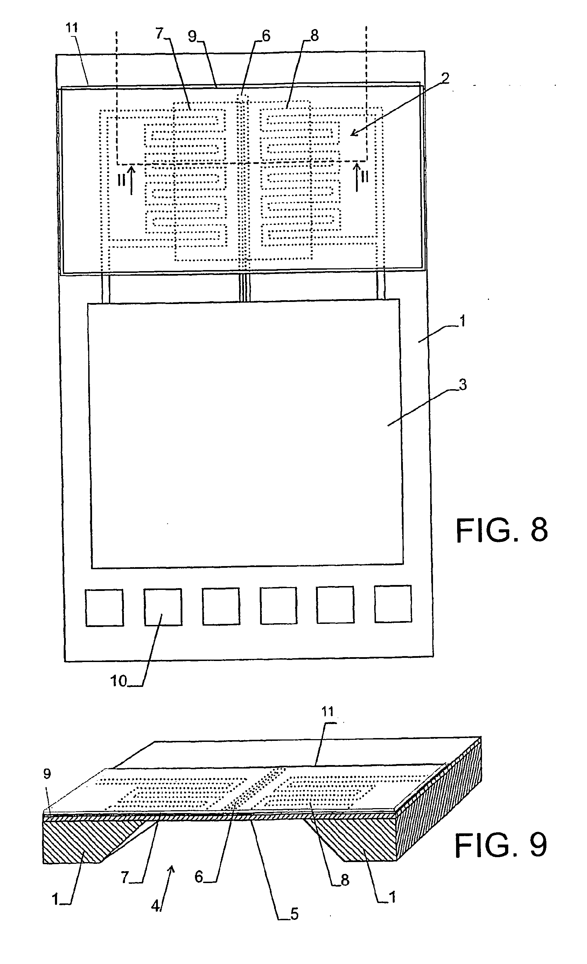

Advantageously, the linearizer is integrated on the same substrate as the flow sensor. The averager may be embodied as a microcontroller and reside remote from the chip comprising the flow sensor. Advantageously, the averager is integrated on the same substrate as the flow sensor. Advantageously, the linearizer is integrated on the same substrate as the averager. Advantageously, the linearizer, the averager and the flow sensor are integrated on the same substrate as shown in the embodiment according to Figure 8 in which a substrate 1 holds a flow sensor 2 for measuring a flow of liquid or gas passing the sensor device, and an integrated circuit 3 comprising the linearizer and the averager. The integrated circuit 3 may include additional electronic components for calculating an output signal that is accessible at pads 10, for example, for amplifying signals, for digitizing signals, for providing reference voltages, etc.. Both, the flow sensor 2 and the integrated circuit 3 are integrated into a semiconductor device, however, in areas distinct from each other. The integrated circuit 3 may be processed by means of standard CMOS processing technology and may include the processing of one or more of semiconducting, conducting and insulating layers. The flow sensor 2 may be processed simultaneously with the integrated circuit 3 and may make use of the subject layers deposited on the substrate 1. Contact pads 10 in form of metal pads are accessible for electrically connecting the sensor device. For example, a linearized averaged sensor signal in pulse width modulated (PWM) form is provided at the pads 10 which may serve, in one application, for controlling a valve.

Underneath a region where the flow sensor 2 is arranged, the substrate 1 provides for an opening or - as depicted in Fig 2 - a recess 4. Such recess 4 can, for example, be achieved by etching the substrate 1 from its backside by means of a suitable etchant and by using the first insulating layer as an etchant stop.

By etching the recess 4 a membrane 5 is fabricated in the semiconductor device. The membrane 5 holds the flow sensor 2. The flow sensor 2 includes a heater 6 and two meandering temperature sensing elements 7, 8 - advantageously thermopiles - aligned symmetrically with respect to the heater 6. In operation, the sensor device is arranged with respect to the flow of the medium to be measured such that the medium first passes the first temperature sensing element 7, then the heater 6 and finally the second temperature sensing element 8. By means of temperature signals provided by the temperature sensing elements 7 and 8 a mass flow of the fluid can be determined. Especially, a difference in temperature between the two temperature sensing elements 7 and 8 is a function of the mass flow. The general principle of operation of measuring element 2 is described in more detail in "Scaling of Thermal CMOS Gas Flow Microsensors: Experiment and Simulation" by F. Mayer et al., in Proc. IEEE Micro Electro Mechanical Systems, (IEEE, 1996), pp. 116ff.

In the present embodiment, the flow sensor 2 is covered by a first coating 9 which is under tensile stress for counterbalancing any compressive stress induced into the membrane 5 during manufacturing. The first coating 1 is covered by a second coating 11 for protecting the membrane 5. The second coating 11 may advantageously extend over the integrated circuit 2, too, and provide protection from environmental impacts. Advantageously, the entire surface of the semiconductor device may be covered by the second coating 11, except for the contact pads 10.

The fluid to be measured advantageously is ammonia, and the parameter of the fluid to be measured advantageously is the mass flow of ammonia.

Reference List

1    Substrate

2    Flow sensor

3    Integrated circuit

4    Recess

5    Membrane

6    Heater

7    First temperature sensing element

8    Second temperature sensing element

9    First coating

10    Contact pad

11    Second coating

12    Linearizer

13    Averager

14    PID controller

15    Channel

16    Valve

17    A/D converter

**Claims**

1. Flow control arrangement for controlling a flow of a fluid in a channel by means of an ON/OFF valve, the arrangement comprising

- a flow sensor (2) for providing a sensor signal (T(t)) representing the flow of the fluid,
- a linearizer (12) for converting the sensor signal (T(t)) into a linearized signal (T'(t), Q(t)),
- a controller (14) for controlling the ON/OFF valve (16) subject to a difference between an actual flow $(\overline{T'(t)}, \overline{Q(t)})$ derived from the linearized signal (T' (t) , Q (t) ) and a reference flow $(\overline{T_{Soll}(t)} \ \overline{Q_{Soll}(t)})$,
- wherein the linearizer (12) is designed for providing linearized signal values at a rate not less than a maximum switching frequency of the ON/OFF valve (16) .

2. Flow control arrangement according to claim 1, wherein the rate of providing the linearized signal values is not less than five times the maximum switching frequency of the ON/OFF valve (16).

3.  Flow control arrangement according to claim 1 or claim 2, comprising an averager (13) for averaging the linearized signal (T'(t), Q(t)) and for providing the averaged linearized signal as actual flow $(\overline{T'(t)},\ Q(t))$ to the controller (14) .

4.  Flow control arrangement according to any one of the preceding claims, comprising an analog/digital converter (17) for converting the sensor signal (T(t)) from an analog form into a digital form, wherein a sampling rate of the analog/digital converter (17) is not less than the maximum switching frequency of the ON/OFF valve (16).

5.  Flow control arrangement according to any one of the preceding claims, wherein the controller (14) is designed for controlling the ON/OFF valve (16) by means of a pulsed control signal (S(t)) with a maximum pulse frequency not more than the maximum switching frequency of the ON/OFF valve (16).

6.  Flow control arrangement according to any one of the preceding claims, wherein a characteristic (Q(T)) of the linearizer (12) between flow values (Q) and sensor signal values (T) is non-linear.

7.  Flow control arrangement according to claim 6, wherein the characteristic (Q(T)) of the linearizer (12) is the inverse of a characteristic (T(Q)) of the flow sensor (2).

8.  Flow control arrangement according to any one of the preceding claims, wherein the linearizer (12) is designed for providing a flow signal (Q(t)) as linearized signal (T'(t), Q(t)) comprising flow values (Q).

9.  Flow control arrangement according any one of the preceding claims, wherein the linearizer (12) is designed for forming the linearized signal (T'(t), Q(t)) by assigning flow values (Q) to sensor signal values (T) of the sensor signal (T(t)) according to a look-up table (18) .

10. Flow control arrangement according to claim 3, wherein the linearizer (12) and the averager (13) are arranged on the same substrate (1) as the flow sensor (2).

11. Flow control arrangement according to any one of the preceding claims, wherein the flow sensor (2) comprises at least one temperature sensing element (7, 8) .

12. Flow control arrangement according to any one of the preceding claims, wherein the linearizer (12) is designed for linearizing sensor signals values (T) of both positive and negative signs.

13. Flow control arrangement according to any one of the preceding claims, wherein the rate of providing the linearized signal values is not less than 100 Hz.

14. Use of a flow control arrangement according to any one of the preceding claims for controlling the flow of ammonia.

15. Method for controlling a flow of a fluid in a channel by means of an ON/OFF valve, comprising

> - receiving a sensor signal (T(t)) from a flow sensor (2) representative of the flow of the fluid in the channel (16),
> - converting the sensor signal (T(t)) into a linearized signal (T'(t), Q(t)),
> - controlling the ON/OFF valve (16) subject to a difference between an actual flow $(\overline{T'(t)},\ \overline{Q(t)})$ derived from the linearized signal (T'(t), Q(t)) and a reference flow $(\overline{T_{Soll}(t)}\ \overline{Q_{soll}(t)})$,
> - wherein linearized signal values are provided at a rate not less than a maximum switching frequency of the ON/OFF valve (16).

FIG. 1

FIG. 2

FIG. 3

| T(Q) | 1,8 | 4,5 | 5,5 |
|------|-----|-----|-----|
| Q    | 2   | 3   | 4   |

FIG. 4

FIG. 5

FIG. 6

FIG. 7

FIG. 8

FIG. 9

Europäisches
Patentamt

European
Patent Office

Office européen
des brevets

**EUROPEAN SEARCH REPORT**

Application Number

EP 10 00 2499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/04716 A1 (MILLIPORE CORP [US]) 18 January 2001 (2001-01-18) * page 9, line 22 - page 11, line 24 * * figure 3 * * page 17, line 23 - page 18, line 10 * ----- | 1-9, 11-15 | INV. G05D7/06 B01L3/00 |
| A | US 2007/215206 A1 (LULL JOHN M [US] ET AL LULL JOHN M [US] ET AL) 20 September 2007 (2007-09-20) * the whole document * ----- | 1-15 | |

TECHNICAL FIELDS
SEARCHED      (IPC)

G05D
B01L

The present search report has been drawn up for all claims

| Place of search | Date of completion of the search | Examiner |
|---|---|---|
| The Hague | 19 January 2011 | Groen, Fokke |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 00 2499

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2011

| Patent document cited in search report | | Publication date | Patent family member(s) | | Publication date |
|---|---|---|---|---|---|
| WO 0104716 | A1 | 18-01-2001 | AT | 236419 T | 15-04-2003 |
| | | | AU | 6405400 A | 30-01-2001 |
| | | | CN | 1371491 A | 25-09-2002 |
| | | | DE | 60001977 D1 | 08-05-2003 |
| | | | DE | 60001977 T2 | 06-11-2003 |
| | | | EP | 1214635 A1 | 19-06-2002 |
| | | | JP | 2003504749 T | 04-02-2003 |
| | | | TW | 434469 B | 16-05-2001 |
| | | | US | 2002114732 A1 | 22-08-2002 |
| | | | US | 6389364 B1 | 14-05-2002 |
| US 2007215206 | A1 | 20-09-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. MAYER et al.** Scaling of Thermal CMOS Gas Flow Microsensors: Experiment and Simulation. *Proc. IEEE Micro Electro Mechanical Systems,* 1996, 116ff